Europäisches Patentamt

European Patent Office

Office européen des brevets

(11) Publication number: **0 176 785 B1**

# EUROPEAN PATENT SPECIFICATION

(45) Date of publication of patent specification: **02.12.92**   (51) Int. Cl.⁵: **B60T 8/00**

(21) Application number: **85111036.1**

(22) Date of filing: **02.09.85**

(54) **Wheel slip controlling system.**

(30) Priority: **28.09.84 JP 205265/84**
        **08.05.85 JP 68437/85 U**

(43) Date of publication of application:
      **09.04.86 Bulletin  86/15**

(45) Publication of the grant of the patent:
      **02.12.92 Bulletin  92/49**

(84) Designated Contracting States:
      **DE GB**

(56) References cited:
      **EP-A- 0 064 669**
      **DE-A- 3 127 302**
      **DE-A- 3 404 018**
      **DE-C- 1 806 671**
      **US-A- 4 402 047**

(73) Proprietor: **TOYOTA JIDOSHA KABUSHIKI KAISHA**
      **1, Toyota-cho Toyota-shi**
      **Aichi-ken 471(JP)**

(72) Inventor: **Nomura, Yoshihisa**
      **1-38, Inoue-cho 11 chome**
      **Toyota-shi Aichi-ken(JP)**
      Inventor: **Ishikawa, Masakazu**
      **10-22, Meiwa-cho 6 chome**
      **Toyota-shi Aichi-ken(JP)**
      Inventor: **Shirai, Akira**
      **5-4, Futamuradai 4 chome**
      **Toyoake-shi Aichi-ken(JP)**
      Inventor: **Nogami. Takahiro**
      **3-12, Izumi-cho 3 chome**
      **Toyota-shi Aichi-ken(JP)**
      Inventor: **Nakamura, Kazumasa**
      **71 Aza-Yoshiden Taki-cho**
      **Okazaki-shi Aichi-ken(JP)**
      Inventor: **Ohashi, Kaoru**
      **36-3 Yokodaito Mial-cho**
      **Okazaki-shi Aichi-ken(JP)**

(74) Representative: **Pellmann, Hans-Bernd,**
      **Dipl.-Ing. et al**
      **Patentanwaltsbüro Tiedtke-**
      **Bühling-Kinne-Grupe-Pellmann-Grams-Struif**
      **Bavariaring 4**
      **W-8000 München 2(DE)**

# Description

BACKGROUND OF THE INVENTION

Field of the Invention

This invention relates to a wheel slip control system for controlling a frictional force between a tire of a driving wheel and the road surface not only during braking but also during acceleration of a car, and more particularly to a wheel slip control system which controls rotation of a driving wheel in response to an output power of an internal combustion engine.

Prior Art

A wheel slip control system is known from DE-A-31 27 302 which discloses a system for controlling the propulsive drive applied to motor vehicle wheels, particularly having hydraulically operated disc brakes, in the sense of preventing undesired spinning of the driven vehicle wheels in order to obtain a desired vehicle behaviour in critical driving situations, especially under extreme road conditions. In the system, a comparator is provided which is triggered by at least one presettable or permanently preset threshold value corresponding to the speed of the vehicle, and which generates an output signal causing the drive torque to be reduced as soon as the threshold value is exceeded and a signal is present, which indicates that the individual wheel brake is being activated and/or that one of the driven wheels is tending to spin. The control system comprises a first control loop which reacts to the state of motion of at least the driven vehicle wheels and which, when one of these wheels is tending to spin, activates its wheel brake, and comprises a second control loop applying a torque-reducing control action to the drive unit of the vehicle when values preferably being determined from the wheel rotation speeds of the undriven vehicle wheels and representing the speed and the acceleration of the vehicle exceed the threshold value. The threshold value of the speed of the vehicle which value governs the control process, is preferably regulated in accordance with the transverse acceleration which acts on the vehicle whenever it follows a curved path, thus performing a control of the vehicle behaviour depending on the detected vehicle speed and being additionally adapted to the vehicle cornering state. This document also discloses the use of a conventional anti-skid brake system in combination with the mentioned wheel slip control system.

Furthermore, document DE-A-18 06 671 discloses an electrically controlled system for preventing a spinning of the driven wheels of a vehicle in which the rotational slippage between the driven and non-driven wheels is determined, and in which the rotational speed of the driven wheels is controlled dependent on the magnitude of such a slippage. To this end, the hydraulic circuit of the system is provided with a single pressure source including a pressure tank supplied by a pump and a plurality of valves being energized or deenergized in accordance with the detected slippage to supply the respective wheel brakes with the required hydraulic pressure. In a normal operating condition the vehicle brake can be actuated in a conventional manner by means of a brake pedal. When a slippage of the driven wheels in relation to a non-driven wheel is detected, a special inlet valve is opened to provide the wheel brakes of the driven wheels with a hydraulic pressure. In order to deactivate the entire control system during the actuation of the brake pedal, a contact is connected with a brake light switch, the signal of which serves to control the respective magnetic valves accordingly, since the whole hydraulic circuit is based on only one single pressure source used for controlling both the acceleration and braking slippage.

Such anti skid brake systems are known which control the rotation of a wheel to provide an optimum braking force during braking of a car without causing a wheel lock. In this type of system, a rotational speed of the wheel (hereinafter referred to as the wheel speed) is controlled, during braking of the car, rather below a travelling speed of the car (hereinafter referred to as the car speed) so as to provide a maximum frictional force between the tire of the wheel and the road surface. In particular, when the car speed is indicated by Vs and a wheel speed by V, a slip ratio S is determined by a following equation

$$S = [(Vs - V)/Vs] \times 100$$

approaches 10%, a frictional force M between the tire and the road surface becomes maximum and a side force F which is a resistance to a side slip of the vehicle presents an appropriate value. Therefore, the wheel speed is controlled to a speed calculated by a following equation

$$V = (1 - \alpha)Vs - \beta$$

where $\alpha$ is a constant (for example, 0.03) and $\beta$ is another constant (for example, 4 [km]), in such a manner that the slip ratio S may be held around 10%.

While various slip controls for braking a car have been proposed so far wherein safety steps are taken so that if a driver brakes the car very quickly, the car may be stopped at a minimum distance without causing a side slip of the car, proposals for traction control which is the control of a slip during the acceleration of the car have been limited only to such that an output power of an engine is controlled when an acceleration slip occurs at a wheel, and efforts have not been made enough to attain optimum control of the acceleration of the car.

Moreover, conventional traction controls have a drawback that the running condition of an internal combustion engine may produce vibrations or cause deterioration of exhaust gas emission very quickly since an output of the engine is controlled by ignition timing and air fuel ratio. They also have another drawback in responsivity of control since a time is required until the engine torque is lowered after the ignition timing control or the air fuel ratio control has been initiated.

## SUMMARY OF THE INVENTION

It is a first object of the present invention to provide an improved wheel slip control system which, when a slip occurs during acceleration or deceleration of a car, can control a frictional force between a tire of a driving wheel and the road surface in good responsivity without deteriorating the drivability of the car.

It is a second object of the invention to provide a wheel slip control system which can make use of pressure of a hydraulic oil source of a conventional anti skid brake system to attain quick responsivity of control as a system for controlling a brake system without the necessity of wide modification of a conventional anti skid brake system.

In order to attain these objects, a wheel slip control system according to the present invention comprises

(a) braking means operated by a driver of a car for braking a rotation of driving wheels;

(b) slip detecting means for detecting a slip condition of said driving wheels to output slip signals indicative of said slipping condition;

(c) anti skid control means connected to said braking means and said driving wheels, and including a first hydraulic system which contains a pressure source and a control valve, and for receiving hydraulic pressure of said braking means, and in response to said slip signals output from said slip detecting means during deceleration of said car, for providing said driving wheels with said hydraulic pressure received from said braking means and controlled by hydraulic pressure supplied from said pressure source via said control valve so as to control braking slips of said driving wheels;

(d) traction control means connected to said slip detection means and said anti skid control means, and in response to said slip signals output from said slip detecting means during acceleration of said car, for providing said driving wheels with hydraulic pressure of said pressure source controlled by said control valve so as to control acceleration slips of said driving wheels; **said wheel slip control system being characterized by:**

(e) a further hydraulic system connected to said braking means, said first hydraulic system, said pressure source and said traction control means; whereby

(f) the further hydraulic system comprises a valve means to provide hydraulic pressure of the pressure source to a pressure selecting means in response to said traction control means; and

(g) the said pressure selecting means provides said first hydraulic system with the higher of the pressures from either said hydraulic pressure of said braking means or said hydraulic pressure provided by said valve means, said higher pressure being supplied to driving wheels via said first hydraulic system.

Accordingly, the wheel slip control system, in order to perform an accurate traction control of the driving wheels controls the frictional force between a tire of a driving wheel and the road surface by using a conventional hydraulic anti-skid brake system without wide modifications of the same, thus, ensuring a good responsivity of the traction control system.

On the one hand, the anti-skid brake system which is connected to the braking means operates such that a hydraulic pressure received from the braking means according to the driver's will and in response to a slip signal outputted from the slip detecting means during a decelleration of the car is supplied to the individual wheel brakes under control of the hydraulic pressure supplied from the pressure source of the anti-skid brake system via a control valve in order to prevent a braking slip of the driving wheels.

On the other hand, the traction control means, which is connected to the slip detecting means and to the anti-skid control means operates such that depending on the detected slip of the driving wheels during an acceleration of the car, individual wheel brakes of the driving wheels are provided with a hydraulic pressure of the pressure source via the control valve in order to apply an appropriate braking source to the driving wheels to prevent the driving wheels from slipping during the acceleration of the car.

With respect to the fact that two independent control processes use the same hydraulic control system of the anti-skid control means for controlling the individual wheel brakes of the driving wheels and, thus, form two interconnected control loops, it is necessary to clearly define the conditions on the basis of which one of the control loops is given preference in using the hydraulic control system. Thus, according to the present invention, another hydraulic system is connected to the braking means, to the first hydraulic system and to the traction control means for providing the first hydraulic system with a higher pressure which can instantaneously be selected either from the hydraulic pressure of the braking means, if the driver intends to reduce the driving speed, or from the hydraulic pressure of the pressure source if a slip of the driving wheels under acceleration is detected. The higher hydraulic pressure is then supplied to the individual wheel brakes of the driving wheels. In particular, during the acceleration of the car and the traction control, or the brake means is sufficiently operated by the driver, the hydraulic pressure of the brake means is applied to the driving wheels via the other hydraulic system and the first hydraulic system.

In order to have the present invention understood more concretely, the invention will be described in more detail in connection with a preferred embodiment thereof.

BRIEF DESCRIPTION OF THE DRAWINGS

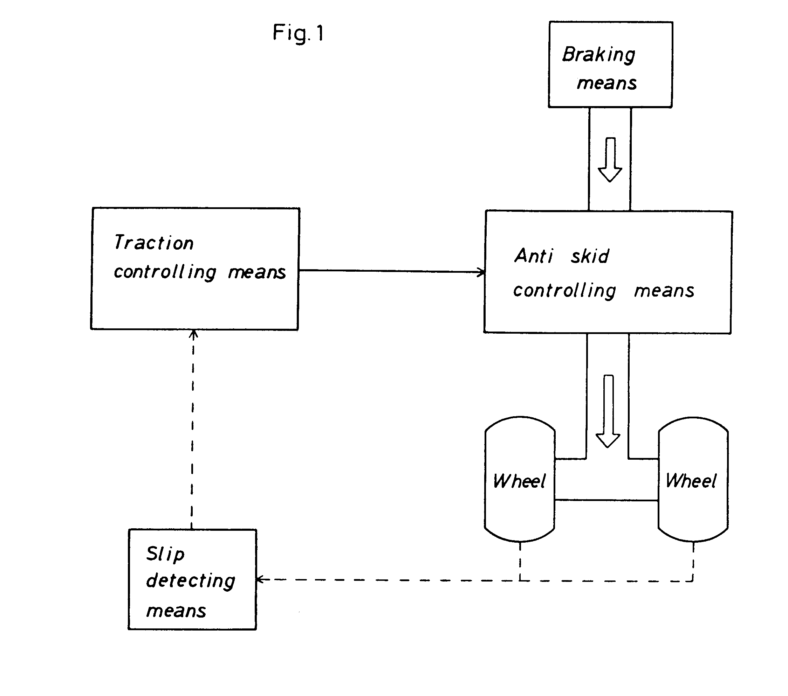

Fig. 1 is a diagram illustrating a basic construction of the present invention;
Fig. 2 is a block diagram illustrating construction of a first embodiment;
Fig. 3 is a flow chart of a control program for the system of Fig. 2;
Fig. 4 is a timing chart of control of the system of Fig. 2;
Fig. 5 is a block diagram illustrating a microcomputer section of the first embodiment when constructed by electronic circuits;
Fig. 6 is a block diagram illustrating construction of a second embodiment;
Fig. 7 is a flow chart of a control program for the system of Fig. 6; and
Fig. 8 is a block diagram of an electronic circuit including a differential pressure switch.

DETAILED DESCRIPTION OF THE PREFERRED EMBODIMENTS

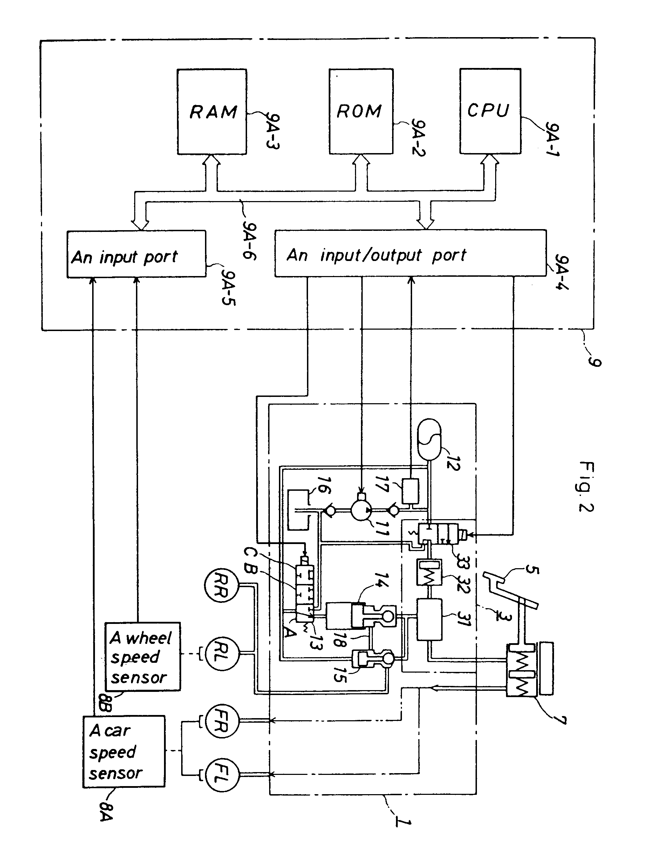

Fig. 2 is a schematic diagram of a braking hydraulic system and a controlling system therefor in a car on which a wheel slip control system of a first embodiment of the present invention is installed.

Referring to Fig. 2, reference numeral 1 denotes a first hydraulic system of a conventional anti skid brake system and 3 a further hydraulic system newly provided afresh for traction control. In particular, if a foot brake 5 is treadled to operate a master cylinder 7 of the tandem type, a braking force is produced at both of left and right front wheels (FL, FR) and left and right rear wheels (RL, RR) corresponding to a hydraulic pressure, and the first hydraulic system 1 of the anti skid brake system for suitably varying the hydraulic pressure of the hydraulic circuit is provided in the hydraulic circuit. Fig. 2 shows only a hydraulic oil path for the rear wheels RR and RL in detail for simplification.

Rotational speeds of the front and rear wheels RR, RL, FR and FL to which a braking force is applied in such a manner as described above are detected by a car speed sensor 8A and a wheel speed sensor 8B and are transmitted to an electronic controlling device 9. The car speed sensor 8A calculates an average of rotational speeds of the left and right front wheels FL and FR and thus outputs a signal which is regarded as a travelling speed of the car while the wheel speed sensor 8B outputs a signal indicative of a rotational speed of a driving wheel RL only.

Now, detailed construction of each system will be described.

At first, the first hydraulic system 1 of the anti skid brake system includes a cut valve 14 to which a flow of oil is changed over by means of a three position solenoid valve 13 from a hydraulic source of an accumulator 12 which stores therein oil to be fed under pressure by a hydraulic pump 11, a bypass valve 15 for assuring operation of the braking hydraulic circuit when the hydraulic source gets out of order and so on, a reservoir 16 for temporarily storing excessive oil therein, and a hydraulic switch 17 for detecting a hydraulic pressure of the hydraulic source to provide an output when a predetermined hydraulic pressure is obtained.

Fig. 2 indicates the first hydraulic system 1 when the anti skid brake system does not operate. A piston of the bypass valve 15 is normally held upward by oil pressure from the accumulator 12 which is maintained at a high pressure by the pump 11 so that oil from a pressure change-over valve 31 which will be hereinafter described does not go into the bypass valve 15 and all flows into the cut valve 14. At this instant, a piston of the cut valve 14 is also held upward since the three position valve 13 is connected at an A port thereof to the cut valve 14. The upward pressure of the accumulator 12 is higher than the pressure of the pressure change-over valve 31, and accordingly oil which flows into the cut valve 14 from the pressure change-over valve 31 goes out of an upper chamber of the cut valve 14, passing a bypass path 18 and then an upper chamber of the bypass valve 15, and provides a braking force to the driving wheels RR and RL.

In other words, the bypass valve 15 only acts as a bypass hydraulic path which imparts a braking force to driving wheels RR and RL via an upper chamber of the bypass valve 15 so far as the hydraulic pressure from the accumulator 12 is normal while the cut valve 14 holds the capacity of the upper chamber thereof to its minimum and unchangeable when the three position valve 13 is connected at the A port thereof to the cut valve 14 so that the braking hydraulic pressure can be controlled only by a pressure of the pressure change-over valve 31.

If the anti skid brake system discriminates in response to some signal that it is necessary to reduce the hydraulic pressure imparted from the pressure change-over valve 31 to the driving wheels RR and RL to reduce the braking force thereof, the electronic controlling device 9 actuates the three position valve 13 to connect a C port of the latter to the first hydraulic system 1. Then, the pressure in a lower chamber below the piston of the cut valve 14 becomes equal to the low pressure of the reservoir 16, and as a result, the piston is pushed down by the pressure of the pressure change-over valve 31 to increase the volume of oil and lower the hydraulic pressure in the upper chamber of the cut valve 14 which has provided the braking force to the driving wheels RR and RL, resulting in reduction in the braking force. Then, if a B port of the three position valve 13 is connected to the first hydraulic system 1 after the piston of the cut valve 14 has been lowered to a position at which a suitable braking force can be obtained, then the movement of the piston of the cut valve 14 will be ended and the pressure in the upper chamber of the cut valve 14 which provides a braking force will be fixed.

In the meantime, if the first hydraulic system 1 of the anti skid brake system becomes out of order by any reason so that the pressure of the accumulator 12 becomes low, then the piston of the bypass valve 15 moves down so that a spherical valve at the top of the piston divides a valve body into an upper chamber and a lower chamber while the cut valve 14 is divided into two upper and lower chambers as the piston thereof moves down. Then, the pressure of the pressure change-over valve 31 is introduced directly into the upper chamber of the bypass valve 15 to form a new further hydraulic system 3 which will provide a braking force to the driving wheels RR and RL to assure a braking operation at least based upon the will of a driver.

Now, the further hydraulic system 3 which is provided anew for traction control will be described. At first, while a hydraulic system of a conventional anti skid brake system is constructed such that pressure oil from the master cylinder 7 of the foot brake is directly introduced into the cut valve 14 and the bypass valve 15, the pressure change-over valve 31 is provided anew in the further hydraulic system 3 such that oil pressure may be introduced into the two valves 14 and 15 via the pressure change-over valve 31. The pressure change-over valve 31 is a valve of the 2-input 1-output type which selectively outputs one of two inputs which is higher in pressure than the other. The master cylinder 7 of the foot brake 5 is connected to one of the two inputs of the pressure change-over valve 31 while another cylinder 32 is connected to the other input. The above described accumulator 12 serves as a power source for operating the cylinder 32, and a two position valve 33 which is controlled by the electronic controlling device 9 intermits connection between the accumulator 12 and the cylinder 32.

The electronic controlling device 9 detects a condition of the braking hydraulic system 3 as described above and produces a controlling output depending upon such detection. In particular, the electronic controlling device 9 receives three output signals from the car speed sensor 8A, the wheel speed sensor 8B and the hydraulic switch 17 as detection information of the braking hydraulic system 3 and controls the pump 11, the three position valve 13 and the two position valve 33 within the hydraulic system 3 in accordance with results of such detection. Fig. 2 illustrates a block diagram wherein the electronic controlling device 9 is constructed as an example from digital circuits including a microcomputer at the center thereof. Referring to Fig. 2, reference symbol 9A-1 denotes a CPU which carries out operation, 9A-2 a ROM which stores a controlling program and various constants therein, 9A-4 an input/output port which outputs controlling signals for operating several hydraulic valves and the pump 11 in the first hydraulic system 1 and which shapes and receives a signal from the hydraulic switch 17, 9A-5 an input port which receives signals from the two speed sensors 8A and 8B, and 9A-6 a bus line forming a passage of information.

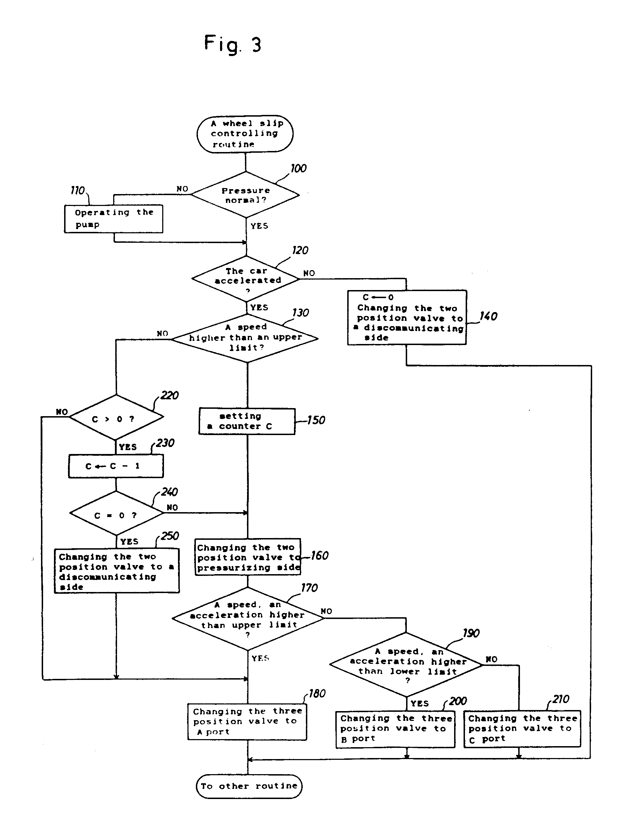

The wheel slip controlling system of the present embodiment having such a construction as described above operates in accordance with a flow chart illustrated in Fig. 3. The flow chart indicates a wheel slip controlling routine which is stored in prior in the ROM 9A-2 and is executed repeatedly every predetermined period of time to control a slip of wheels.

If the CPU 9A-1 advances into a process of the wheel slip controlling routine, at first step 100 is executed to discriminate if the pressure of the first hydraulic system 1 is normal or not. The pressure of the accumulator 12 of the anti skid brake system is detected by the hydraulic switch 17 as described hereinabove, and if the pressure lowers, the hydraulic switch 17 will provide no output. Thus, the output of the hydraulic switch 17 is monitored, and if there is no output from the hydraulic switch 17, step 110 is once executed to operate the pump 11 to raise the pressure of the accumulator 12 until there appears an output of the hydraulic switch 17 again. On the contrary, if there is an output of the hydraulic switch 17 and thus the pressure is discriminated as normal, there is no necessity of executing the process of step 110 and control advances directly to next step 120.

A step 120, it is discriminated if the car is now being accelerated or decelerated. In particular, acceleration is calculated from a frequency of pulse signals from the car speed sensor 8A and it is discriminated if a result of the calculation is equal to or over zero. And if it is discriminated that the result is equal to or over zero, that is, the car is being accelerated, control advances to step 130 to execute a following traction control. On the contrary, if it is discriminated that the result is below zero and the car is being decelerated, then step 140 is executed to reset a counter C which is used in the traction control as hereinafter described whereafter the present routine is finished and another routine for a conventional anti skid control not shown will be executed.

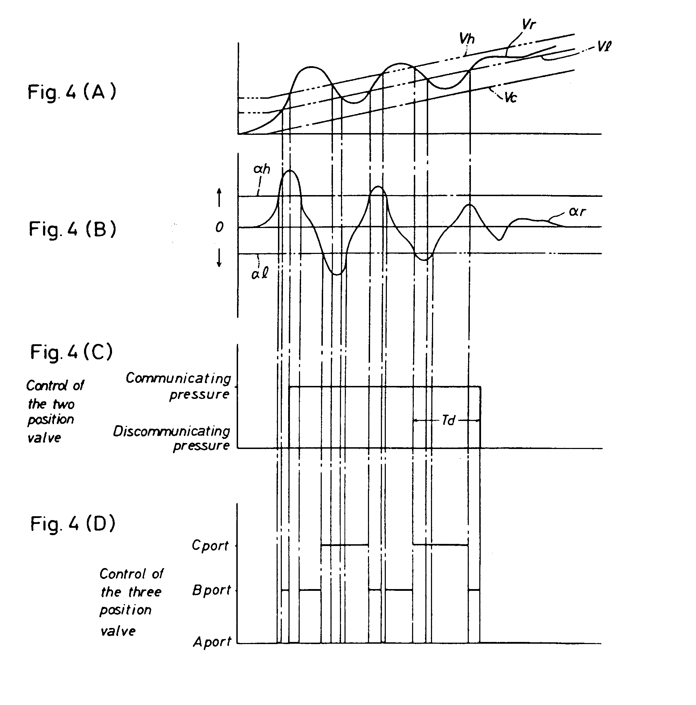

At step 130, as a first discrimination for executing the traction control, it is discriminated if the driving wheels RR and RL are rotating at higher speed than an upper limit value for the driving wheel rotational speed. Here, the upper limit value means a speed represented by a line Vh illustrated in (A) of Fig. 4 and is a rotatinal speed at which a maximum frictional force acts on the driving wheels RR and RL as calculated from the detection result Vc of the car speed sensor 8A, that is, an upper limit value within a range of rotational speed of the driving wheels RR and RL at which the slip ratio becomes - 10% or so. Reference symbol Vℓ in (A) of Fig. 4 indicates a lower limit value of the range. If at step 130 the detection result Vr of the wheel speed sensor 8B which is the rotational speed of the driving wheels RR and RL is discriminated as Vr ≥ Vh, then step 150 is executed to set the counter C to a predetermined positive integer, and then at the following step 160, a changing over operation is executed to change over the two position valve 33 to a pressurizing side wherein the pressure of the accumulator 12 is imparted to the pressure change-over valve 31. By this changing over operation, a braking pressure is applied to the cut valve 14 so that a braking force acts upon the driving wheels RR and RL.

Then, step 170 is executed to discriminate if the rotational speed Vr and the accerelation αr of the driving wheel RL exceed their respective upper limit values. Here, the upper and lower limit values of the acceleration mean predetermined values αh and αℓ as respectively, illustrated in (B) of Fig. 4, and represent upper and lower limit values of the acceleration which can assume while a large frictional force is maintained between the driving wheels RR and RL and the road surface as estimated from the weight of the car, a load to the driving wheels RR and RL, and so on. Accordingly, when the condition of step 170 is met, the rotation of the driving wheels RR and RL involves a large slip, and thus step 180 is executed to carry out a changing over control to the A port of the three position valve 13 wherein pressurization from the pressure change-over valve 31 to the cut valve 14 all acts as a braking force.

On the contrary, if at step 170 it is not discriminated that the condition is met, it is discriminated at step 190 if the actual rotational speed Vr and acceleration r of the driving wheels RR and RL are higher or not than the lower limit values Vℓ and αℓ for the speed and acceleration, respectively. Thus, if they are discriminated as higher, then the magnitude of a braking force to the driving wheels RR and RL is regarded as suitable at present and the three position valve 13 is changed over to the B port to maintain constant volume of the upper chamber which imparts the braking force of the cut valve 14 (step 200). Conversely, if it is discriminated at step 190 that either one or both of the speed and the acceleration are below the lower limit value or values thereof, it is regarded that a braking force greater than a required level is applied to the driving wheels RR and RL so that the C port of the three position valve 13 is connected to the hydraulic system to increase the volume of the upper chamber of the cut valve 14 and to reduce the braking force to the driving wheels RR and RL (step 210).

Meanwhile, processes of steps 220 to 250 which are executed when it is discriminated at step 130 that the condition is not met are provided to set a delay time to control of the two position valve 33. As described hereinabove, when it is discriminated at step 130 that the condition is met, the two position valve 33 which is normally at a pressure discommunicating side wherein the pressure of the accumulator 12 is not imparted to the pressure change-over valve 31, and thus the brake is rendered effective by the pressure of the accumulator 12. After then, the three position valve 13 is suitably actuated to accomplish traction control to obtain an optimum driving force in order to effect fine control of the braking force corresponding to variations of the rotational speed Vr and the acceleration αr of the driving wheels RR and RL. But when the present routine is executed again after lapse of the predetermined period of time, if at step 130 it is discriminated that the rotational speed Vr of the driving wheels RR and RL is not over the upper limit value therefor and the two position valve 33 is promptly changed over to the pressure discommunicating side, then the braking force which has acted upon the driving wheels RR and RL so far will disappear completely and thus vibrations due to such control may be brought about to the car.

Therefore, while the two position valve 33 is held to the pressure communicating side to produce a braking force only for the predetermined period of time after it has been discriminated that the condition of step 130 is met no more, the braking force of the driving wheels RR and RL is controlled by the three position valve 13. Accordingly, if it is discriminated at step 130 that the condition is not met, at first step 220 is executed to determine if the contents of the counter C which was set at step 150 are greater than zero or not, and if C > 0, then the counter C is decremented at step 230, and then if it is discriminated at step 240 that the new contents of the counter C are not zero, then the aforementioned steps including step 160 are executed again. However, if C = 0, it is regarded that the two position valve 33 is held to the pressure communicating side for the predetermined period of time so that control now proceeds to step 250 at which the two position valve 33 is changed over to the pressure discommunicating side to effect control of the next steps including 180 is executed without decrementing the counter C again in accordance with the discrimination at step 220.

Controls of the two position valve 33 and the three position valve 13 which are executed in the control of the present step are illustrated in (C) and (D) of Fig. 4. As shown in (C) and (D) of Fig. 4, once the two position valve 33 is rendered operative, it effects transmission of pressure to produce a braking force until the car is brought to a stabilized accelerating condition due to a delay time Td of the two position valve 33, that is, the time preset by the counter while the three position valve 13 suitably changes over the three ports thereof to adjust the braking force to execute the traction control.

The present embodiment thus indicates an excellent example of constitution of a wheel slip controlling system which can attain traction control during acceleration of a car as shown in (A) of Fig. 4 only by additionally providing a hydraulic controlling system 3 for traction control as described above.

In other words, if a first hydraulic system 1 of an anti skid brake system which is conventionally installed on a car is utilized and a constant braking force is provided to driving wheels RR and RL by means of a newly provided further hydraulic system 3, then the braking force is thereafter regulated by the same control with the anti skid brake system. Besides, even if the same electronic controlling device 9 with the anti skid brake system is used, since a slip controlling routine as illustrated in Fig. 3 is executed during acceleration of the car whereas another slip controlling routine for known anti skid braking (not shown) is executed during deceleration, the same electronic controlling device 9 is used commonly and thus a control system having good operability can be constructed. Moreover, since the hydraulic control of the anti skid brake system is designed to allow finer pressure control than a conventional one, fine traction control can be attained readily.

It is to be noted that while in the present embodiment control of the braking force is all accomplished by the common three position valve 13 of the anti skid brake system in order to simply attain such excellent effects as described above, the two position valve 33 may otherwise be replaced by a three position valve which is controlled to regulate the braking hydraulic pressure itself which is provided to the pressure change-over valve 31. Control of the three position valve 13 in the latter case may be one which executes substantially the same routine as that of Fig. 3, and when the rotational speed and acceleration of driving wheels RR and RL both exceed the respective upper limit values therefor, the pressure of the accumulator 12 may be imparted to the pressure change-over valve 31, but when they are both lower than the respective lower limit values therefor, the pressure of the accumulator 12 may be reduced and when in any other conditions, the braking force may be maintained constant.

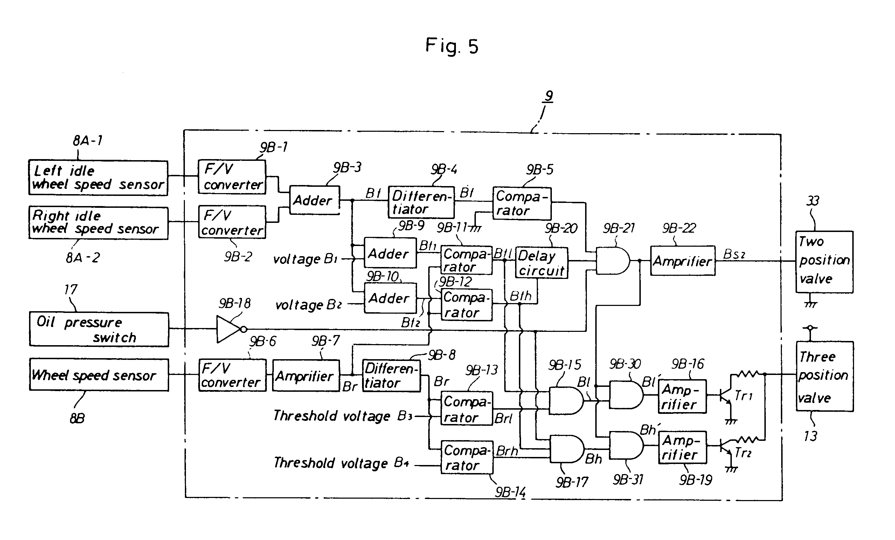

Now, a second embodiment will be described wherein the electronic controlling device 9 is constructed from electronic circuits without using a microcomputer. The second embodiment has, in hardware, a circuitry construction as illustrated in Fig. 5.

Referring to Fig. 5, reference symbols 9B-1 and 9B-2 denote F/V converters for converting a frequency of pulse signals developed from left and right idle wheel speed sensors 8A-1 and 8A-2 and corresponding to rotations of idle wheels into a voltage signal, respectively, reference symbol 9B-3 designates an adder for adding the thus converted voltage signal to obtain a voltage Bf corresponding to the travelling speed of the car (hereinafter referred to as a car speed voltage), 9B-4 a differentiator for differentiating the car speed voltage Bf to obtain a voltage Bf corresponding to an acceleration of the car (hereinafter referred to as a car acceleration voltage), and 9B-5 a comparator for comparing the car acceleration voltage Bf with the ground voltage (0 volt) to determine if the car is being accelerated or not.

Further, reference symbol 9B-6 denotes an F/V converter for converting a frequency of pulse signals developed from the wheel speed sensor 8B into a voltage signal, 9B-7 an amplifier for amplifying the voltage signal from the F/V converter 9B-6 to a voltage corresponding to the car speed voltage Bf obtained from the adder 9B-3 to obtain a driving wheel speed voltage Br indicative of the speed Vr of driving wheels RR and RL, and 9B-8 a differentiator for differentiating the driving wheel speed voltage Br to output a driving wheel acceleration voltage Br.

In addition, reference symbols 9B-9 and 9B-10 denote adders for adding predetermined voltages B1 and B2 to the car speed voltage Bf developed from the adder 9B-3 and corresponding to the travelling speed of the car to output reference voltages Bf1 and Bf2 for determination of a degree of an acceleration slip of the car, respectively, 9B-11 and 9B-12 comparators for comparing the reference voltages Bf1 and Bf2 output from the adders 9B-9 and 9B-10 with the driving wheel speed voltage Br output from the amplifier 9B-7 to output voltage signals Bf$\ell$ and Bfh of a high level when Bf1 $\le$ Br and Bf2 $\le$ Br, respectively, and 9B-13 and 9B-14 further comparators for comparing the driving wheel acceleration voltage Br output from the differentiator 9B-8 with predetermined voltages B3 and B4 to output voltage signals Br$\ell$ and Brh of a high level when Br $\ge$ B3 and Br $\ge$ B4, respectively.

The voltage signals Bf$\ell$ and Br$\ell$ output from the comparators 9B-11 and 9B-13 are input to an AND circuit 9B-15. A voltage signal B$\ell$ output from the AND circuit 9B-15 is input to another AND circuit 9B-30 at the next stage, and a signal B$\ell$' output from the AND circuit 9B-30 is provided via an amplifier 9B-16 to the base of a transistor Tr1 as a controlling signal for changing over the three position valve 13 to the A port or to the C port. The voltage signals Bfh and Brh output from the comparators 9B-12 and 9B-14, respectively, are input to a further AND circuit 9B-17, and a signal from the hydraulic switch 17 is also input to the AND circuit 9B-17 via a NOT circuit 9B-18. A voltage signal Bh output from the AND circuit 9B-17 is input to a yet further AND circuit 9B-31 from which a voltage signal Bh' is output The voltage signal Bh' is applied via an amplifier 9B-19 to the base of another transistor Tr2 as a controlling signal for changing over the three position valve 13 to the B port. Further, an output of an AND circuit 9B-21 is input via the AND circuits 9B-30 and 9B-31 to the amplifiers 9B-19 and 9B-16, respectively. Accordingly, the three position valve 13 is normally controlled to the A port.

Meanwhile, a voltage signal which is output from the comparator 9B-5 and indicates that the car is in an accelerating condition, another voltage signal output from the comparator 9B-12 via a delay circuit 9B-20 and a further voltage signal output from the hydraulic switch 17 via the NOT circuit 9B-18 are input to an AND circuit 9B-21. An output terminal of the AND circuit 9B-21 is connected to provide an actuating signal an amplifier 9B-22 via the two position valve 33.

It is apparent that the circuit construction as described above can attain such control of the two position valve 33 and the three position valve 13 as seen in Fig. 4. In particular, the delay circuit 9B-20 corresponds to means for producing a delay of control of the counter C provided by the above described steps 220 to 240 while a signal amplified by the amplifier 9B-19 corresponds to results of determination provided by step 180 and a signal amplified by the amplifier 9B-16 corresponds to the process at step 200. In this manner, the components of the embodiments described above may be suitably chosen without departing from the scope of the present invention.

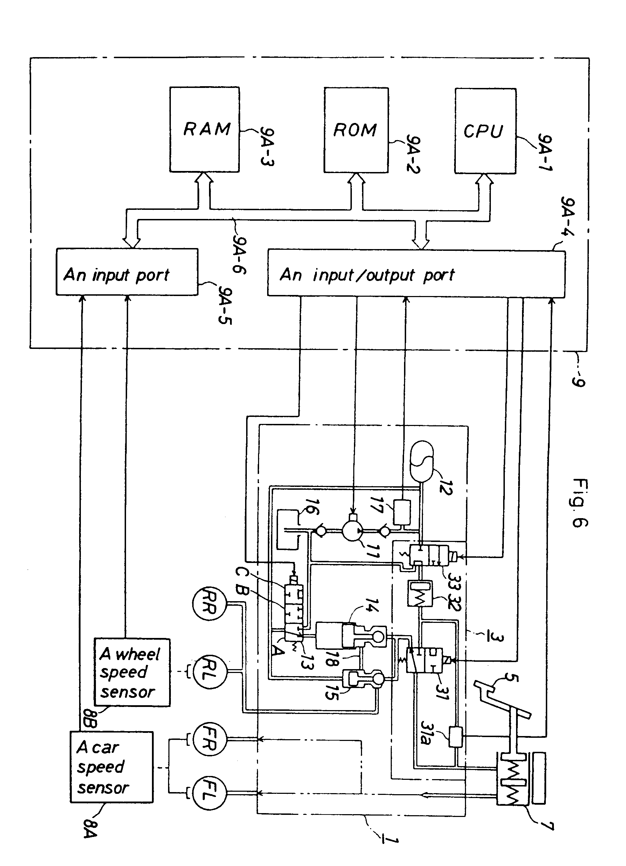

Now, description will be given of a second embodiment of the invention. The second embodiment is different from the first embodiment in that it additionally includes a differential pressure switch 31a and the change-over valve 31 is replaced by a pressure change-over valve 31 while four new steps are additionally provided to the flowchart. In particular, referring to Fig. 6, the differential pressure switch 31a is additionally provided to the embodiment of Fig. 2 and develops a signal to the electronic controlling device 9 when the pressure on the master cylinder 7 side is higher. The pressure change-over switch 31 is changed over in response to an output of the differential pressure switch 31a.

The electronic controlling device 9 detects such conditions of the braking hydraulic system 1 as described above and develops controlling outputs depending upon results of such detections. In particular, the electronic controlling device 9 receives, as detection information of the braking hydraulic system 1, output signals of the car speed sensor 8A, wheel speed sensor 8B, hydraulic switch 17 and differential pressure switch 31a and controls the pump 11, three position valve 13, pressure change-over valve 31 and two position valve 33 of the first hydraulic system 1 depending upon results of such detections.

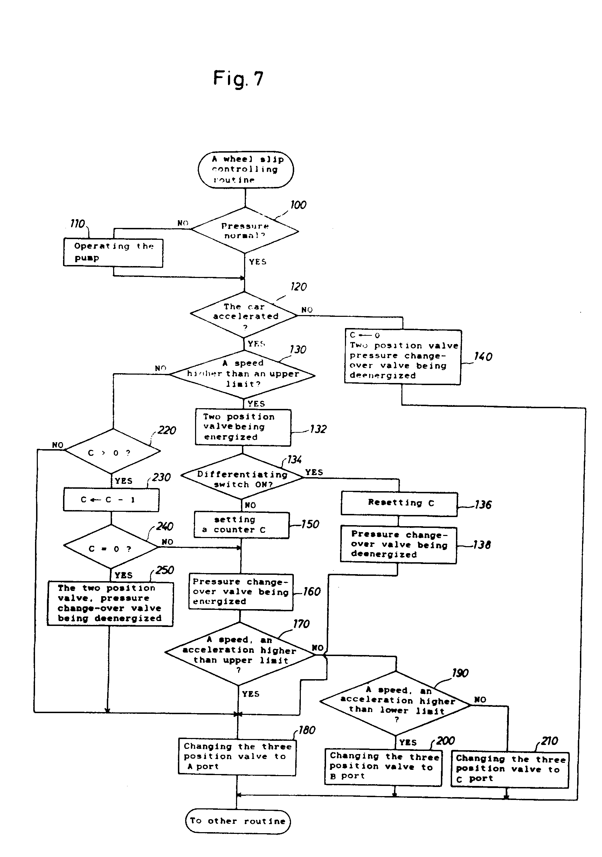

A flowchart of Fig. 7 will now be described. The flowchart is drawn for the second embodiment and includes additional steps 132, 134, 136 and 138 to the flowchart of Fig. 3. If the detection result Vr of the wheel speed sensor 8B which indicates the rotational speed of the driving wheels is determined as Vr $\ge$ Vh at step 130, then the two position valve 33 is energized at step 132 to prepare hydraulic oil pressure for traction control. Then at step 134, the differential pressure switch 31a is checked it develops an output or not. Here, if there is an output from the differential pressure switch 31a, it is determined "YES" as the brake pedal 5 is treadled down sufficiently, and then at step, the counter C is reset to zero whereafter the change-over valve 31 is deenergized or held deenergized at step 138. Thereafer, step 180 is executed to change over the three position valve 13 to the A port.

As described above, if the car is being accelerated and the brake pedal 5 is treadled down sufficiently, the hydraulic pressure of the brake master cylinder 7 is imparted to the wheels via the hydraulic pressure change-over valve 31, cut valve 14 and bypass valve 15 as it is. Thus, slipping control in accordance with the will of a driver during acceleration can be attained.

On the contrary, if there is no output from the differential pressure switch 31a at step 134 and it is determined "NO", subsequently step 150 is executed so that a predetermined positive integer is set to the counter C. Then, by the process of next step 160, the solenoid of the pressure change-over valve 31 is energized so that the pressure of the accumulator 12 is applied as a braking pressure to the cut valve 14 via the two position valve 33, cylinder 32 and pressure change-over valve 31.

Since the two brake oil pressures are instantaneously selected by the pressure change-over valve 31 of the electromangetic type, interference of the two hydraulic circuits and inadvertent application of a pressure to wheel cylinders of the brake system for the wheels can be prevented. Accordingly, responsiveness and pedal feeling are improved comparing with a change valve such as a shuttle valve which automatically selects a higher pressure side depending upon a difference in pressure. Besides, oil consumption for changing over becomes unnecessary.

It is to be noted that changing over of the hydraulic pressure by the pressure change-over valve 31 as in the present embodiment would provide such effects as described below in assembly of a car. In particular, while de-aeration of a hydraulic circuit is one of difficult works when the hydraulic circuit is to be constructed, such deairing operation can be carried out simply since air in the hydraulic circuit of the cylinder 32 can be extracted to the reservoir 16 if the hydraulic pressure of the hydraulic circuit of the brake master cylinder 7 is raised after the hydraulic circuit is deaired by a normal process and the pressure change-over 31 is repeatedly turned on and off.

A timing chart for the second embodiment is similar to that of Fig. 4 for the first embodiment.

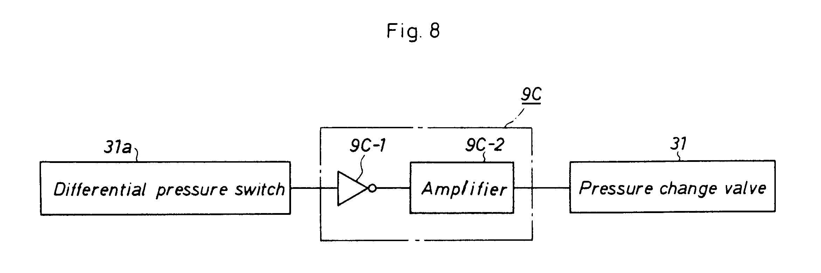

The present embodiment can also be constructed with an electronic circuit in place of the microcomputer. This modification is similar to that of Fig. 5 of the first embodiment and includes an additional electronic controlling device 9C as described below. In particular, the electronic controlling device 9C includes, as shown in Fig. 8, an inverter 9C-1 and an amplifier 9C-2 for inverting and amplifying an output signal of the differential pressure switch 31a to drive the pressure change-over valve 31. When there is no output signal from the differential pressure switch 31a, the pressure change-over valve 31 will impart the hydraulic pressure of the accumulator 12 side to the brake system for the wheels.

## Claims

1. A wheel slip control system comprising:

   (a) braking means (5, 7) operated by a driver of a car for braking a rotation of driving wheels (RR, RL);

   (b) slip detecting means for detecting a slip condition of said driving wheels (RR, RL) to output slip signals indicative of said slipping condition;

   (c) anti skid control means connected to said braking means (5, 7) and said driving wheels (RR, RL), and including a first hydraulic system (1) which contains a pressure source (12) and a control valve (13), and for receiving hydraulic pressure of said braking means (5, 7), and in response to said slip signals output from said slip detecting means during deceleration of said car, for providing said driving wheels (RR, RL) with said hydraulic pressure received from said braking means (5, 7) and controlled by hydraulic pressure supplied from said pressure source (12) via said control valve (13) so as to control braking slips of said driving wheels (RR, RL);

   (d) traction control means connected to said slip detection means and said anti skid control means, and in response to said slip signals output from said slip detecting means during acceleration of said car, for providing said driving wheels (RR, RL) with hydraulic pressure of said pressure source (12) controlled by said control valve (13) so as to control acceleration slips of said driving wheels (RR, RL); **said wheel slip control system being characterized by:**

   (e) a further hydraulic system (3) connected to said braking means (5, 7), said first hydraulic system (1), said pressure source (12) and said traction control means; whereby

   (f) the further hydraulic system (3) comprises a valve means (32, 33) to provide hydraulic pressure of the pressure source (12) to a pressure selecting means (31) in response to said traction control means; and (g) the said pressure selecting means (31) provides said first hydraulic system (1) with the higher of the pressures from either said hydraulic pressure of said braking means (5, 7) or said hydraulic pressure provided by said valve means (32, 33), said higher pressure being supplied to driving wheels (RR, RL) via said first hydraulic system (1).

2. A wheel slip control system according to claim 1, being characterized in that said braking means (5, 7) includes:

(a1) a brake pedal (5) adapted to be actuated by operation of said driver of said car; and

(a2) a master cylinder (7) for providing said hydraulic system (3) with hydraulic pressure corresponding to an extent of actuation of said brake pedal (5).

3. A wheel slip control system according to claim 1, being characterized in that said slip detecting means includes:

(b1) a first sensor (8B) for detecting a driving wheel speed (RR, RL);

(b2) a second sensor (8A) for detecting a car speed (Vc); and

(b3) a comparator (9B11, 9B12, 9B-13, 9B-14), which is triggered by at least one predetermined threshold value (Vh, Vl, $\alpha$h, $\alpha$l), connected to said first sensor (8B) and said second sensor (8A) for generating said slip signals which effects reduction of the drive torque of said driving wheels (RR, RL).

4. A wheel slip control system according to claim 1, being characterized in that said first hydraulic system (1) includes:

(c1) a hydraulic unit (11, 16) cooperating with said pressure source (12) and said control valve (13) for storing, actuating and accumulating said hydraulic pressure;

(c2) said control valve (13) being in the form of a solenoid valve connected to said hydraulic unit (11, 16) and said pressure source (12), and having three change-over positions for providing said driving wheels (RR, RL) with said hydraulic pressure from said hydraulic system (3) at a first position (A port), holding said hydraulic pressure at a second position (B port), and reducing said hydraulic pressure at a third position (C port); and

(c3) pressure regulating valves (14, 15) provided between said further hydraulic system (3) and said solenoid valve (13) for regulating said hydraulic pressure supplied from said hydraulic system (3) to said driving wheels (RR, RL) by said hydraulic pressure supplied from said solenoid valve (13);

and that said further hydraulic system (3) includes:

(e1) a solenoid valve (33) connected to said pressure source (12) and adapted to be changed over in response to said traction control means;

(e2) a cylinder (32) connected to said solenoid valve (33); and

(e3) a pressure change-over valve (31) in the form of 2-input and 1-output type change valve connected to said cylinder (32) and said braking means (5, 7) for receiving both said hydraulic pressure from said cylinder (32) and said hydraulic pressure from said braking means (5, 7) and to provide automatically said pressure regulating valves (14, 15) with the higher of the said hydraulic pressures.

5. A wheel slip control system according to claim 4, being characterized in that said traction control means includes:

(d1) means for changing over said solenoid valve (13) to said first position (A port) when both said driving wheel speed (Vr) and a driving-wheel acceleration ($\alpha$r) derived from said driving wheel speed (Vr) exceed a first upper limit value (Vh) and a second upper limit value ($\alpha$h), respectively, to provide said driving wheels (RR, RL) with said hydraulic pressure from said pressure change-over valve (31);

(d2) means for changing over said solenoid valve (13) to said second position (B port) when both said driving wheel speed (Vr) and said driving wheel acceleration ($\alpha$r) exceed a first lower limit value (V1) and a second lower limit value ($\alpha$l), respectively, to maintain said hydraulic pressure presently applied to said driving wheels (RR, RL); and

(d3) means for changing over said solenoid valve (13) to said third position (C port), when either one or both of said driving wheel speed (Vr) and said driving wheel acceleration ($\alpha$r) are below the lower limit value thereof, to reduce said hydraulic pressure presently applied to said driving wheels (RR, RL).

6. A wheel slip control system according to claim 4, being characterized in that said traction control means further comprises:

(d4) means for energizing said solenoid valve (33) via which said hydraulic pressure from said pressure source (12) is supplied to said pressure change-over valve (31) when said driving wheel speed (Vr) exceeds said first upper limit value (Vh) whereas said means delays deenergization of said solenoid valve (33) for a predetermined time period (Td) being set by means of a counter (C).

7.  A wheel slip control system according to claim 1, being characterized in that said first hydraulic system (1) includes:

(c1) a hydraulic unit (11, 16) cooperating with said pressure source (12) and said control valve (13) for storing, actuating and accumulating said hydraulic pressure

(c2) said control valve (13) being in the form of a solenoid valve connected to said hydraulic unit (11, 16) and said pressure source (12), and having three change-over positions for providing said driving wheels (RR, RL) with said hydraulic pressure from said further hydraulic system (3) at a first position (A port), holding said hydraulic pressure at a second position (B port), and reducing said hydraulic pressure at a third position (C port); and

(c3) pressure regulating valves (14, 15) provided between said further hydraulic system (3) and said solenoid valve (13) for regulating said hydraulic pressure supplied from said further hydraulic system (3) to said driving wheels (RR, RL) by said hydraulic pressure supplied from said solenoid valve (13);

and that said further hydraulic system (3) includes:

(e1) a solenoid valve (33) connected to said pressure source (12) and adapted to be changed over in response to said traction control means;

(e2) a cylinder (32) connected to said solenoid valve (33); and

(e3) a solenoid valve (31) in the form of 2-input and 1-output type valve connected to said cylinder (32), said braking means (5, 7) and said pressure regulating valves (14, 15) for receiving either said hydraulic pressure from said cylinder (32) or said hydraulic pressure from said braking means (5, 7); and

(e4) a differential pressure switch (31a) connected to an output of said pressure change-over valve (31) and an output of said braking means (5, 7) for outputting to said traction control means a signal indicating that said hydraulic pressure from said braking means (5, 7) is higher than said hydraulic pressure from said cylinder (32), and said traction control means energizes said solenoid valve (31) to select said hydraulic pressure from said braking means (5, 7) based on said signal of said differential pressure switch (31a) input to said traction control means.

8.  A wheel slip control system according to claim 7, being characterized in that said counter (C) is reset and said solenoid valve (33) is deenergized when said traction control means determines from said signal of said differential pressure switch (31a) that said hydraulic pressure from said braking means (5, 7) is higher than said hydraulic pressure from said cylinder (32).

**Patentansprüche**

1.  Radschlupfregelsystem, das

(a) eine von einem Fahrer eines Fahrzeugs betätigte Bremsvorrichtung (5, 7) zum Bremsen der Drehung von Antriebsrädern (RR, RL),

(b) eine Schlupfdetektoreinrichtung, die einen Schlupfzustand der Antriebsräder (RR, RL) erfaßt, um den Schlupfzustand anzeigende Schlupfsignale abzugeben,

(c) eine Antiblockierregeleinrichtung, die mit der Bremsvorrichtung (5, 7) und den Antriebsrädern (RR, RL) verbunden ist und die ein erstes hydraulisches System (1) enthält, das eine Druckquelle (12) und ein Steuerventil (13) enthält und das Hydraulikdruck aus der Bremsvorrichtung (5, 7) aufnimmt und im Ansprechen auf die Schlupfsignale aus der Schlupfdetektoreinrichtung während des Verlangsamens des Fahrzeugs den Antriebsrädern (RR, RL) den aus der Bremsvorrichtung (5, 7) aufgenommenen und durch aus der Druckquelle (12) zugeführten Druck über das Steuerventil (13) gesteuerten Hydraulikdruck zuführt, um Bremsschlupfzustände der Antriebsräder (RR, RL) zu regeln, und

(d) eine Anfahrregeleinrichtung aufweist, die an die Schlupfdetektoreinrichtung und die Antiblockierregeleinrichtung angeschlossen und die im Ansprechen auf die Schlupfsignale aus der Schlupfdetektoreinrichtung während des Beschleunigens des Fahrzeugs den Antriebsrädern (RR, RL) den durch das Steuerventil (13) gesteuerten Hydraulikdruck der Druckquelle (12) zuführt, um Beschleunigungsschlupfzustände der Antriebsräder (RR, RL) zu regeln, wobei das Radschlupfregelsystem **gekennzeichnet ist durch**

(e) ein weiteres hydraulisches System (3), das mit der Bremsvorrichtung (5, 7), dem ersten hydraulischen System (1), der Druckquelle (12) und der Anfahrregeleinrichtung verbunden ist, wobei

(f) das weitere hydraulische System (3) eine Ventilvorrichtung (32, 33) zum Zuführen von Hydraulikdruck der Druckquelle (12) zu einer Druckwählvorrichtung (31) im Ansprechen auf die Anfahrregeleinrichtung aufweist, und

(g) die Druckwählvorrichtung (31) dem ersten hydraulischen System (1) den höheren der Drücke von entweder dem Hydraulikdruck der Bremsvorrichtung (5, 7) oder dem durch die Ventilvorrichtung (32, 33) zugeführten Hydraulikdruck liefert, wobei der höhere Druck über das erste hydraulische System (1) den Antriebsrädern (RR, RL) zugeführt wird.

2. Radschlupfregelsystem nach Anspruch 1, **dadurch gekennzeichnet**, daß die Bremsvorrichtung (5, 7)

(a1) ein von dem Fahrer des Fahrzeugs betätigbares Bremspedal (5) und

(a2) einen Hauptzylinder (7) zum Speisen des hydraulischen Systems (3) mit Hydraulikdruck entsprechend dem Ausmaß einer Betätigung des Bremspedals (5) enthält.

3. Radschlupfregelsystem nach Anspruch 1, **dadurch gekennzeichnet**, daß die Schlupfdetektoreinrichtung

(b1) einen ersten Sensor (8B) zum Erfassen einer Antriebsradgeschwindigkeit (RR, RL),

(b2) einen zweiten Sensor (8A) zum Erfassen einer Fahrzeuggeschwindigkeit (Vc) und

(b3) einen an dem ersten Sensor (8B) und dem zweiten Sensor (8A) angeschlossenen, durch mindestens einen vorbestimmten Schwellenwert (Vh, V1, $\alpha$h, $\alpha$1) ausgelösten Vergleicher (9B11, 9B12, 9B-13, 9B-14) zum Erzeugen der Schlupfsignale enthält, der ein Verringern des Antriebsdrehmomentes der Antriebsräder (RR, RL) bewirkt.

4. Radschlupfregelsystem nach Anspruch 1, **dadurch gekennzeichnet**,

daß das erste hydraulische System (1)

(c1) eine mit der Druckquelle (12) und dem Steuerventil (13) zusammenwirkende Hydraulikeinheit (11, 16) zum Speichern, Schalten und Sammeln des Hydraulikdrucks,

(c2) das Steuerventil (13) in Form eines Solenoidventils, das mit der Hydraulikeinheit (11, 16) und der Druckquelle (12) verbunden ist und das drei Umschaltstellungen zum Speisen der Antriebsräder (RR, RL) mit dem Hydraulikdruck aus dem hydraulischen System (3) bei einer ersten Stellung (A port), Aufrechterhalten des Hydraulikdrucks bei einer zweiten Stellung (B port) und Verringern des Hydraulikdrucks bei einer dritten Stellung (C port) hat, und

(c3) zwischen dem weiteren hydraulischen System (3) und dem Solenoidventil (13) angebrachte Druckregelventile (14, 15) zum Regeln des aus dem hydraulischen System (3) den Antriebsrädern (RR, RL) zugeführten Hydraulikdrucks durch den aus dem Solenoidventil (13) zugeführten Hydraulikdruck enthält, und

daß das weitere hydraulische System (3)

(e1) ein an die Druckquelle (12) angeschlossenen Solenoidventil (33), das im Ansprechen auf die Anfahrregeleinrichtung umschaltbar ist,

(e2) einen an das Solenoidventil (33) angeschlossenen Zylinder (32) und

(e3) ein Druckumschaltventil (31) in Form eines Umschaltventils mit zwei Einlässen und einem Auslaß enthält, das mit dem Zylinder (32) und der Bremsvorrichtung (5, 7) verbunden ist, um sowohl den Hydraulikdruck aus dem Zylinder (32) als auch den Hydraulikdruck (5, 7) aus der Bremsvorrichtung (5, 7) aufzunehmen und den Druckregelventilen (14, 15) automatisch den höheren der Hydraulikdrücke zuzuführen.

5. Radschlupfregelsystem nach Anspruch 4, **dadurch gekennzeichnet**, daß die Anfahrregeleinrichtung

(d1) eine Einrichtung zum Umstellen des Solenoidventils (13) in die erste Stellung (A port), wenn jeweils die Antriebsradgeschwindigkeit (Vr) und eine aus der Antriebsradgeschwindigkeit (Vr) abgeleitete Antriebsradbeschleunigung ($\alpha$r) einen ersten oberen Grenzwert (Vh) bzw. einen zweiten oberen Grenzwert ($\alpha$h) übersteigt, zum Speisen der Antriebsräder (RR, RL) mit dem Hydraulikdruck aus dem Druckumschaltventil (31),

(d2) eine Einrichtung zum Umstellen des Solenoidventils (13) auf die zweite Stellung (B port), wenn jeweils die Antriebsradgeschwindigkeit (Vr) und die Antriebsradbeschleunigung ($\alpha$r) einen ersten unteren Grenzwert (V1) bzw. einen zweiten unteren Grenzwert ($\alpha$1) übersteigt, zum Aufrechterhalten des gegenwärtig an die Antriebsräder (RR, RL) angelegten Hydraulikdrucks und

(d3) eine Einrichtung zum Umstellen des Solenoidventils (13) auf die dritte Stellung (C port), wenn entweder die Antriebsradgeschwindigkeit (Vr) oder die Antriebsradbeschleunigung (αr) oder beide unter dem unteren Grenzwert hierfür liegt bzw. liegen, zum Verringern des gegenwärtig an die Antriebsräder (RR, RL) angelegten Hydraulikdrucks enthält.

6.  Radschlupfregelsystem nach Anspruch 4, **dadurch gekennzeichnet**, daß die Anfahrregeleinrichtung ferner

(d4) eine Einrichtung aufweist, die dann, wenn die Antriebsradgeschwindigkeit (Vr) den ersten oberen Grenzwert (Vh) übersteigt, das Solenoidventil (33) erregt, über das der Hydraulikdruck aus der Druckquelle (12) dem Druckumschaltventil (31) zugeführt wird, wogegen die Einrichtung das Aberregen des Solenoidventils (33) um eine mittels eines Zählers (C) eingestellte vorbestimmte Zeitdauer (Td) verzögert.

7.  Radschlupfregelsystem nach Anspruch 1, **dadurch gekennzeichnet**, daß das erste hydraulische System (1

(c1) eine mit der Druckquelle (12) und dem Steuerventil (13) zusammenwirkende Hydraulikeinheit (11, 16) zum Speichern, Schalten und Sammeln des Hydraulikdrucks,

(c2) das Steuerventil (13) in Form eines Solenoidventils, das mit der Hydraulikeinheit (11, 16) und der Druckquelle (12) verbunden ist und drei Umschaltstellungen zum Speisen der Antriebsräder (RR, RL) mit dem Hydraulikdruck aus dem weiteren Hydrauliksystem (3) bei einer ersten Stellung (A port), Aufrechterhalten des Hydraulikdrucks bei einer zweiten Stellung (B port) und Verringern des Hydraulikdrucks bei einer dritten Stellung (C port) hat, und

(c3) zwischen dem weiteren hydraulischen System (3) und dem Solenoidventil (13) angebrachte Druckregelventile (14, 15) zum Regeln des aus dem weiteren hydraulischen System (3) den Antriebsrädern (RR, RL) zugeführten Hydraulikdrucks durch den aus dem Solenoidventil (13) zugeführten Hydraulikdruck enthält, und

daß das weitere hydraulische System (3)

(e1) ein an die Druckquelle (12) angeschlossenen Solenoidventil (33), das im Ansprechen auf die Anfahrregeleinrichtung umstellbar ist,

(e2) einen an das Solenoidventil (33) angeschlossenen Zylinder (32),

(e3) ein Solenoidventil (31) in Form eines Ventils mit zwei Einlässen und einem Auslaß, das an den Zylinder (32), die Bremsvorrichtung (5, 7) und die Druckregelventile (14, 15) angeschlossen ist, um entweder den Hydraulikdruck aus dem Zylinder (32) oder den Hydraulikdruck aus der Bremsvorrichtung (5, 7) aufzunehmen, und

(e4) einen an einen Auslaß des Druckumschaltventils (31) und einen Auslaß der Bremsvorrichtung (5, 7) angeschlossenen Differenzdruckschalter (31a) enthält, der an die Anfahrregeleinrichtung ein Signal abgibt, das anzeigt, daß der Hydraulikdruck aus der Bremsvorrichtung (5, 7) höher als der Hydraulikdruck aus dem Zylinder (32) ist, wobei die Anfahrregeleinrichtung das Solenoidventil (31) zum Wählen des Hydraulikdrucks aus der Bremsvorrichtung (5, 7) gemäß dem in die Anfahrregeleinrichtung eingegebenen Signal des Differenzdruckschalters (31a) erregt.

8.  Radschlupfregelsystem nach Anspruch 7, **dadurch gekennzeichnet**, daß der Zähler (C) rückgesetzt und das Solenoidventil (33) aberregt wird, wenn die Anfahrregeleinrichtung aus dem Signal des Differenzdruckschalters (31a) ermittelt, daß der Hydraulikdruck aus der Bremsvorrichtung (5, 7) höher als der Hydraulikdruck aus dem Zylinder (32) ist.

**Revendications**

1.  Système de contrôle du patinage de roues comprenant:

(a) des moyens de freinage (5, 7) actionnés par le conducteur d'une automobile pour freiner la rotation des roues motrices (RR, RL);

(b) des moyens de détection de patinage pour détecter une condition de patinage desdites roues motrices (RR, RL) et émettre en sortie des signaux de patinage indicatifs de la condition de patinage;

(c) des moyens de réglage d'antipatinage reliés aux moyens de freinage (5, 7) et aux roues motrices (RR, RL), comprenant un premier système hydraulique (1) qui contient une source de pression (12) et une soupape de commande (13), prévus pour recevoir la pression hydraulique des moyens de freinage (5, 7) et en réponse aux signaux de patinage émis en sortie par les moyens de détection de patinage pendant la décélération de l'automobile appliquer aux roues motrices (RR, RL) la pression hydraulique reçue des moyens de freinage (5, 7), et commandés par la pression hydraulique envoyée par la source de pression (12) par l'intermédiaire de la soupape de commande (13) de manière à commander le patinage pendant le freinage des roues motrices (RR, RL);

(d) des moyens de commande de traction reliés aux moyens de détection de patinage et aux moyens de réglage d'antipatinage, et en réponse aux signaux de patinage émis en sortie par les moyens de détection de patinage pendant l'accélération de l'automobile pour fournir auxdites roues motrices (RR, RL) la pression hydraulique de la source de pression (12) commandée par [a soupape de commande (13) de manière à contrôler le patinage pendant l'accélération des roues motrices (RR, RL); le système de réglage du patinage de roues étant caractérisé par

(e) un second système hydraulique (3) relié aux moyens de freinage (5, 7), au premier système hydraulique (1), à la source de pression (12) et aux moyens de commande de traction,

(f) le second système hydraulique (3) comprenant des moyens à soupape (32, 33) pour envoyer la pression hydraulique de la source de pression (12) à des moyens de sélection de pression (31) en réponse aux moyens de commande de traction; et

(g) les moyens de sélection de pression (31) appliquant au premier système hydraulique la plus élevée des pressions provenant soit de la pression hydraulique des moyens de freinage (5, 7) soit de la pression hydraulique fournie par les moyens à soupape (32, 33), la pression la plus élevée étant appliquée aux roues motrices (RR, RL) par l'intermédiaire du premier système hydraulique (1).

2.  Système de contrôle du patinage de roues selon la revendication 1, caractérisé en ce que les moyens de freinage (5, 7) comprennent:

(a1) une pédale de frein (5) adaptée à être actionnée par le conducteur de l'automobile; et

(a2) un maître-cylindre (7) pour appliquer au système hydraulique (3) la pression hydraulique correspondant à l'amplitude de l'actionnement de la pédale de frein (5).

3.  Système de contrôle du patinage de roues selon la revendication 1, caractérisé en ce que les moyens de détection de patinage comprennent

(b1) un premier capteur (8B) pour détecter la vitesse des roues motrices (RR, RL),

(b2) un second capteur (8A) pour détecter la vitesse (Vc) de l'automobile, et

(b3) un comparateur (9B-11, 9B-12, 9B-13, 9B-14) qui est déclenché par au moins une valeur de seuil prédéterminée (Vh, Vl, αh, αl), relié au premier capteur (8B) et au second capteur (8A) pour générer les signaux de patinage qui déterminent la réduction du couple d'entraînement des roues motrices (RR, RL).

4.  Système de contrôle du patinage de roues selon la revendication 1, caractérisé en ce que le premier système hydraulique (1) comprend

(c1) une unité hydraulique (11, 16) correspondant avec la source de pression (12) et la soupape de commande (13) pour stocker, mettre en oeuvre et accumuler la pression hydraulique;

(c2) la soupape de commande (13) se présentant sous la forme d'une électrovanne reliée à l'unité hydraulique (11, 16) et à la source de pression (12) et comprenant trois positions de commutation pour appliquer aux roues motrices (RR, RL) la pression hydraulique provenant du système hydraulique (3) dans une première position (orifice A), pour maintenir ladite pression hydraulique dans une seconde position (orifice B), et pour réduire la pression hydraulique dans une troisième position (orifice C); et

(c3) des soupapes de régulation de pression (14, 15) montées entre le second système hydraulique (3) et l'électrovanne (13) pour réguler la pression hydraulique envoyée par le système hydraulique (3) aux roues motrices (RR, RL) par la pression hydraulique appliquée par' l'électrovanne (13);

et en ce que le second système hydraulique (3) comprend

(e1) une électrovanne (33) reliée à la source de pression (12) et adaptée à commuter en réponse aux moyens de commande de traction;

(e2) un cylindre (32) relié à l'électrovanne (33), et

(e3) une soupape de commutation de pression (31) du type à deux entrées et à une sortie, reliée au cylindre (32) et aux moyens de freinage (5, 7) pour recevoir à la fois la pression hydraulique provenant du cylindre (32) et la pression hydraulique provenant des moyens de freinage (5, 7) et pour appliquer automatiquement aux soupapes de régulation de pression (14, 15) la plus élevée

**5.** Système de contrôle du patinage de roues selon la revendication 4, caractérisé en ce que les moyens de commande de traction comprennent:

(d1) des moyens pour faire commuter l'électrovanne (13) vers la première position (orifice A) quand à [a fois la vitesse (Vr) des roues motrices et l'accélération (αr) des roues motrices dérivée de la vitesse (Vr) desdites roues motrices dépasse une première valeur limite supérieure (Vh) et une seconde limite supérieure (αh) respectivement, pour appliquer aux roues motrices (RR, RL) la pression hydraulique provenant de la soupape de commutation de pression (31);

(d2) des moyens pour faire commuter l'électrovanne (13) sur la seconde position (orifice B) quand à la fois la vitesse (Vr) des roues motrices et l'accélération (αr) des roues motrices dépasse une première valeur limite inférieure (V1) et une seconde valeur limite inférieure (α1) respectivement pour maintenir la pression hydraulique appliquée actuellement aux roues motrices (RR, RL); et

(d3) des moyens pour faire commuter l'électrovanne (13) vers la troisième position (orifice C) quand soit la vitesse (Vr) des roues motrices soit l'accélération (αr) des roues motrices, soit les deux, sont situées au-dessous de leur valeur limite inférieure pour réduire la pression hydraulique appliquée actuellement aux roues motrices (RR, RL).

**6.** Système de contrôle du patinage de roues selon la revendication 4, caractérisé en ce que les moyens de commande de traction comprennent en outre:

(d4) des moyens pour exciter l'électrovanne (33) par laquelle la pression hydraulique provenant de la source de pression (12) est appliquée à la soupape de commutation de pression (31) quand la vitesse (Vr) des roues motrices dépasse la première valeur limite supérieure (Vh) alors que lesdits moyens retardent la désexcitation de l'électrovanne (33) pendant une période de temps prédéterminée (Td) qui est fixée par un compteur (C).

**7.** Système de contrôle du patinage de roues selon la revendication 1, caractérisé en ce que le premier système hydraulique (1) comprend:

(c1) une unité hydraulique (11, 16) coopérant avec la source de pression (12) et la soupape de commande (13) pour stocker, mettre en oeuvre et accumuler la pression hydraulique,

(c2) la soupape de commande (13) se présentant sous la forme d'une électrovanne reliée à l'unité hydraulique (11, 16) et à la source de pression (12) et comprenant trois positions de commutation pour appliquer aux roues motrices (RR, RL) la pression hydraulique du système hydraulique (3) dans une première position (orifice A), pour maintenir la pression hydraulique dans une seconde position (orifice B), et pour réduire la pression hydraulique dans une troisième position (orifice C); et

(c3) des soupapes de régulation de pression (14, 15) montées entre le second système hydraulique (3) et l'électrovanne (13) pour réguler la pression hydraulique appliquée par le second système hydraulique (3) aux roues motrices (RR, RL) par la pression hydraulique fournie par ladite électrovanne (13);

et en ce que le second système hydraulique (3) comprend

(e1) une électrovanne (33) reliée à la source de pression (12) et adaptée à commuter en réponse aux moyens de traction;

(e2) un cylindre (32) relié à l'électrovanne (33); et

(e3) une électrovanne (31) du type à deux entrées et à une sortie reliée au cylindre (32), aux moyens de freinage (5, 7) et aux soupapes de régulation de pression (14, 15) pour recevoir soit la pression hydraulique du cylindre (32) soit la pression hydraulique des moyens de freinage (5, 7); et

(e4) un commutateur de pression différentiel (31a) relié à une sortie de la soupape de commutation de pression (31) et à une sortie des moyens de freinage (5, 7) pour émettre en sortie vers les moyens de commande de traction un signal indiquant que la pression hydraulique provenant des moyens de freinage (5, 7) est supérieure à la pression hydraulique provenant du cylindre (32), et les moyens de commande de traction excitent l'électrovanne (31) pour sélectionner la pression hydraulique provenant des moyens de freinage (5, 7) sur la base du signal du commutateur de pression différentiel (31a) qui est appliqué aux moyens de commande de traction.

**8.** Système de contrôle du patinage de roues selon la revendication 7, caractérisé en ce que le compteur (C) est remis à l'état initial et l'électrovanne (33) est désexcitée quand les moyens de commande de traction déterminent à partir du signal du commutateur de pression différentielle (31a) que la pression hydraulique provenant des moyens de freinage (5, 7) est supérieure à la pression hydraulique provenant du cylindre (32).

Fig. 1

Slip detecting means

Traction controlling means

Wheel

Wheel

Anti skid controlling means

Braking means

Fig. 2

RAM 9A-3  ROM 9A-2  CPU 9A-1

An input port 9A-6    An input/output port 9A-4

9A-5

9

A wheel speed sensor 8B

A car speed sensor 8A

RR  RL  FR  FL

12  16  17  11  33  32  5  14  3  31  18  13  15  7  C  B  A  1

EP 0 176 785 B1

# Fig. 3

A wheel slip controlling routine

100 — Pressure normal?
- NO → 110 — Operating the pump
- YES ↓

120 — The car accelerated?
- NO → 140 — C ← 0 Changing the two position valve to a discommunicating side
- YES ↓

130 — A speed higher than an upper limit?
- NO → 220 — C > 0 ?
  - NO →
  - YES → 230 — C ← C − 1 → 240 — C = 0 ?
    - NO →
    - YES → 250 — Changing the two position valve to a discommunicating side
- YES → 150 — setting a counter C

160 — Changing the two position valve to pressurizing side

170 — A speed, an acceleration higher than upper limit?
- NO → 190 — A speed, an acceleration higher than lower limit?
  - YES → 200 — Changing the three position valve to B port
  - NO → 210 — Changing the three position valve to C port
- YES → 180 — Changing the three position valve to A port

To other routine

19

EP 0 176 785 B1

Fig. 4 (A)

Fig. 4 (B)

Fig. 4 (C)

Control of
the two
position
valve

Fig. 4 (D)

Control of
the three
position
valve

Fig. 5

Fig. 6

Fig. 7

EP 0 176 785 B1

## Fig. 8